# EUROPEAN PATENT SPECIFICATION

(11) **EP 3 050 908 B1**
(45) Date of publication and mention of the grant of the patent: **04.09.2019**
(21) Application number: 15841033.2
(22) Date of filing: 04.12.2015
(51) Int. Cl.: C08G 64/38, C08G 64/18, C08G 77/448, C08L 69/00

(54) **COPOLYCARBONATE AND COMPOSITION COMPRISING SAME**
COPOLYCARBONAT UND ZUSAMMENSETZUNG DAMIT
COPOLYCARBONATE ET COMPOSITION LE COMPRENANT

(30) Priority: 04.12.2014 KR 20140173005; 24.07.2015 KR 20150105367; 03.12.2015 KR 20150171780
(43) Date of publication of application: 03.08.2016
(73) Proprietor: LG Chem, Ltd., Seoul 07336 (KR)
(72) Inventor: SON, Young Wook, Daejeon 34122 (KR); BAHN, Hyong Min, Daejeon 34122 (KR); HWANG, Young Young, Daejeon 34122 (KR); PARK, Jung Jun, Daejeon 34122 (KR); HONG, Moo Ho, Daejeon 34122 (KR); LEE, Ki Jae, Daejeon 34122 (KR); CHUN, Byoung Kyu, Daejeon 34122 (KR); KO, Un, Daejeon 34122 (KR)
(74) Representative: Goddar, Heinz J.
(86) International application number: PCT/KR2015/013248
(87) International publication number: WO 2016/089173

(56) References cited:
- WO-A2-2013/175445
- JP-B2- 3 457 805
- KR-A- 20070 098 827
- KR-A- 20140 027 199
- KR-A- 20140 116 921
- US-A1- 2012 252 985
- US-A1- 2012 288 654
- US-A1- 2014 249 280

## Description

### [TECHNICAL FIELD]

The present invention relates to a copolycarbonate and a composition comprising the same, and more specifically to a copolycarbonate being economically produced, and exhibiting an excellent transparency and a high spiral flow while having a high impact strength at room temperature and a low melt index, and to a composition comprising the same.

### [BACKGROUND OF ART]

Polycarbonate resins are prepared by condensation-polymerization of an aromatic diol such as bisphenol A with a carbonate precursor such as a phosgene and have excellent impact strength, dimensional stability, heat resistance and transparency. Thus, the polycarbonate resins have application in a wide range of uses, such as exterior materials of electrical and electronic products, automobile parts, building materials, and optical components.

Recently, in order to apply these polycarbonate resins to more various fields, many studies have been made to obtain desired physical properties by copolymerizing two or more aromatic diol compounds having different structures from each other and introducing units having different structures in a main chain of the polycarbonate.

Especially, studies for introducing a polysiloxane structure in a main chain of the polycarbonate have been undergone, but most of these technologies have disadvantages in that production costs are high, and a transparency and a melt index are lowered.

Given the above circumstances, the present inventors have conducted intensive studies to overcome the above-mentioned disadvantages encountered with the prior arts, and found that a copolycarbonate in which a specific siloxane compound is introduced in a main chain of the polycarbonate as described below exhibit an excellent transparency and a high spiral flow while having a high impact strength at room temperature and a low melt index. The present invention has been completed on the basis of such a finding.
US2012/288654 A1 discloses a silicone polycarbonate elastomeric block copolymer prepared by the reaction of: 50 to 90 wt.-% of at least one difunctional phenolic terminated polydiorganosiloxane having from 5 to 50 organosiloxane repeating units, 10 to 50 wt.-% of at least one bisphenol containing from 6 to 36 carbon atoms, and carbonate precursor; wherein less than 20% of the carbonate linkage formed by the carbonate precursor are between phenolic terminated polydiorganosiloxanes as determined by ¹³C NMR; and wherein the block copolymer has at least 30% elongation before yield as measured by ASTM D 638.
US2012/0252985 A1 discloses polycarbonate blend compositions comprising a first polycarbonate and a second polycarbonate wherein the polycarbonate blend has a glass transition temperature between 148°C and 155°C, as measured using a differential scanning calorimetry method; a percent haze of less than 3.5% and a %transmission of greater than 80% as measured using ASTM D 1003-07, and wherein the blend composition possesses 80% or greater ductility in a notched izod test at -20°C at a thickness of 0.125 inches according to ASTM D 256-10.
US2014/0249280 A discloses a polysiloxane-polycarbonate copolymer. The molecular weight of the siloxane monomer constituting the copolymer is maintained in specifically high level and thus excellent low-temperature impact resistance can be achieved even with low siloxane content, and the viscosity of the copolymer is maintained in a low level and thus flowability and moldability can be improved.

### [DETAILED DESCRIPTION OF THE INVENTION]

### [Technical Problem]

It is an object of the present invention to provide a copolycarbonate exhibiting an excellent transparency and a high spiral flow while having a high impact strength at room temperature and a low melt index.

It is a further object of the present invention to provide a composition comprising the above-mentioned copolycarbonate.

### [Technical Solution]

In order to achieve these objects, the present invention provides a copolycarbonate comprising: an aromatic polycarbonate-based first repeating unit; and one or more aromatic polycarbonate-based second repeating units having siloxane bonds, wherein the copolycarbonate has a melt index (MI) of 3 to 10 g/10 min as measured in accordance with ASTM D1238 (300°C, 1.2 kg conditions), and a transparency of 87 to 91% as measured in accordance with ASTM D1003 (layer thickness of 3 mm), and
wherein the second repeating unit comprises a repeating unit represented by the following Chemical Formula 2 and a repeating unit represented by the following Chemical Formula 3: 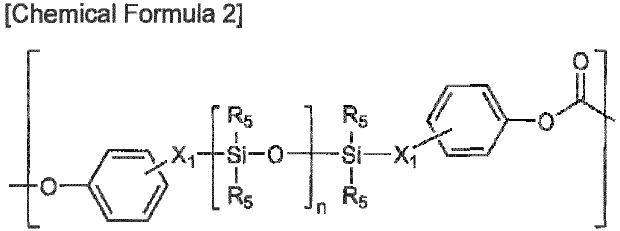 in the Chemical Formula 2,
each of X₁ is independently C₁₋₁₀ alkylene,
each of R₅ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
n is an integer of 10 to 200, 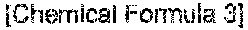 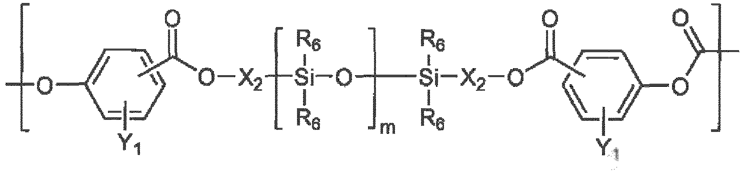
in the Chemical Formula 3,
each of X₂ is independently C₁₋₁₀ alkylene,
each of Y₁ is independently hydrogen, C₁₋₆ alkyl, halogen, hydroxy, C₁₋₆ alkoxy, or C₆₋₂₀ aryl,
each of R₆ is independently hydrogen; or C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
   m is an integer of 10 to 200.

Preferably, the melt index is not less than 4 g/10 min, not less than 5 g/10 min, or not less than 6 g/10 min, and is not more than 9 g/10 min, or not more than 8 g/10 min.

Also, preferably, the copolycarbonate according to the present invention has a spriral flow of 16 to 25 cm as measured in accordance with ASTM D3123 (300°C, mold temperature of 80°C, capillary thickness of 1.5 mm, holding pressure of 2000 bar). In general, polycarbonates exhibit a low spiral flow if their melt index is low. However, the copolycarbonate according to the present invention exhibits a high spiral flow while having a low melt index as describe above. Thus, the copolycarbonate exhibiting a high spiral flow as in the present invention has excellent injection performance during injection molding of molded articles having large volume. Therefore, although the copolycarbonate has a low melt index, it can exhibit an excellent moldability. Preferably, the spiral flow is not less than 17 cm, or not less than 18 cm, and is not more than 24 cm, not more than 23 cm, not more than 22 cm, not more than 21 cm, or not more than 20 cm.

Also, preferably, the copolycarbonate according to the present invention has a ratio of the spiral flow and the melt index (cm/g/10 min) of 1.7 to 5.0. More preferably, the ratio is not less than 1.8, not less than 1.9, not less than 2.0, not less than 2.1, not less than 2.2, not less than 2.3, or not less than 2.4; and not more than 4.9, not more than 4.8, not more than 4.7, not more than 4.6, or not more than 4.5.

In addition, the copolycarbonate according to the present invention has a weight average molecular weight of 1,000 to 100,000 g/mol, preferably 25,000 to 60,000 g/mol, or 15,000 to 35,000 g/mol. More preferably, the above weight average molecular weight is not less than 20,000 g/mol, not less than 21,000 g/mol, not less than 22,000 g/mol, not less than 23,000 g/mol, not less than 24,000 g/mol, not less than 25,000 g/mol, not less than 26,000 g/mol, not less than 27,000 g/mol, or not less than 28,000 g/mol. Also, the weight average molecular weight is not more than 34,000 g/mol, not more than 33,000 g/mol, or not more than 32,000 g/mol.

In addition, the copolycarbonate according to the present invention has an impact strength at room temperature of 700 to 1000 J/m as measured at 23°C in accordance with ASTM D256 (0.3175 cm (1/8 inch), Notched Izod). Further, preferably, the impact strength at room temperature is not less than 750 J/m, not less than 800 J/m, not less than 850 J/m, or not less than 900 J/m.

Further, the copolycarbonate according to the present invention has an impact strength at low-temperature of 700 to 950 J/m as measured at -30°C in accordance with ASTM D256 (0.3175 cm (1/8 inch), Notched Izod). Preferably, the impact strength at low-temperature is not less than 750 J/m, or not less than 800 J/m.

Further, the mole ratio of the aromatic polycarbonate-based first repeating unit and the one or more aromatic polycarbonate-based second repeating units having siloxane bonds is preferably 1 : 0.004-0.006, and the weight ratio thereof is preferably 1 : 0.04-0.07.

In particular, the aromatic polycarbonate-based first repeating unit is formed by reacting an aromatic diol compound and a carbonate precursor, and it is preferably represented by the following Chemical Formula 1: 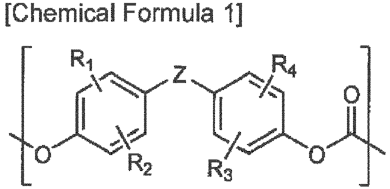 in the Chemical Formula 1
R₁, R₂, R₃, and R₄ are each independently hydrogen, C₁₋₁₀ alkyl, C₁₋₁₀ alkoxy, or halogen,
Z is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

Preferably, R₁, R₂, R₃, and R₄ are each independently hydrogen, methyl, chloro, or bromo.

Further, Z is preferably a linear or branched C₁₋₁₀ alkylene unsubstituted or substituted with phenyl, and more preferably methylene, ethane-1,1-diyl, propane-2,2-diyl, butane-2,2-diyl, 1-phenylethane-1,1-diyl or diphenylmethylene. Further, preferably, Z is cyclohexane-1,1-diyl, O, S, SO, SO₂, or CO.

Preferably, the repeating unit represented by Chemical Formula 1 may be derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane.

As used herein, 'derived from aromatic diol compounds' means that a hydroxy group of the aromatic diol compound and a carbonate precursor are reacted to form the repeating unit represented by Chemical Formula 1.

For example, when bisphenol A which is an aromatic diol compound, and triphosgene which is a carbonate precursor are polymerized, the repeating unit represented by Chemical Formula 1 is represented by the following Chemical Formula 1-1

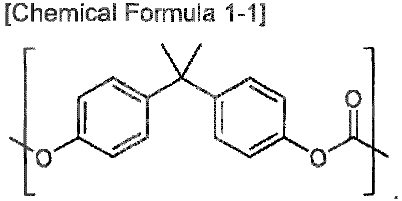

The carbonate precursor used herein may include one or more selected from the group consisting of dimethyl carbonate, diethyl carbonate, dibutyl carbonate, dicyclohexyl carbonate, diphenyl carbonate, ditolyl carbonate, bis(chlorophenyl)carbonate, di-m-cresyl carbonate, dinaphthyl carbonate, bis(diphenyl)carbonate, phosgene, triphosgene, diphosgene, bromo phosgene and bishalo formate. Preferably, triphosgene or phosgene may be used.

The one or more aromatic polycarbonate-based second repeating units having siloxane bonds is formed by reacting one or more siloxane compounds and a carbonate precursor.

In Chemical Formula 2, each of X₁ is independently preferably C₂₋₁₀ alkylene, more preferably C₂₋₄ alkylene and most preferably propane-1,3-diyl.

Also, preferably, each of R₅ is independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. In addition, each of R₅ is independently preferably C₁₋₁₀ alkyl, more preferably C₁₋₆ alkyl, still more preferably C₁₋₃ alkyl and most preferably methyl.

Further, preferably, n is an integer of not less than 10, not less than 15, not less than 20, not less than 25, not less than 26, not less than 27, or not less than 28; and not more than 50, not more than 45, not more than 40, not more than 35, not more than 34, or not more than 33.

In Chemical Formula 3, each of X₂ is independently preferably C₂₋₁₀ alkylene, more preferably C₂₋₆ alkylene and most preferably isobutylene.

Further, preferably, Y₁ are hydrogen.

Further, preferably, each of R₆ is independently hydrogen, methyl, ethyl, propyl, 3-phenylpropyl, 2-phenylpropyl, 3-(oxiranylmethoxy)propyl, fluoro, chloro, bromo, iodo, methoxy, ethoxy, propoxy, allyl, 2,2,2-trifluoroethyl, 3,3,3-trifluoropropyl, phenyl, or naphthyl. Further, each of R₆ is independently preferably C₁₋₁₀ alkyl, more preferably C₁₋₆ alkyl, still more preferably C₁₋₃ alkyl, and most preferably methyl.

Preferably, m is not less than 40, not less than 45, not less than 50, not less than 55, not less than 56, not less than 57, or not less than 58; and not more than 80, not more than 75, not more than 70, not more than 65, not more than 64, not more than 63, or not more than 62.

The repeating unit represented by Chemical Formula 2 and the repeating unit represented by Chemical Formula 3 are, respectively, derived from a siloxane compound represented by the following Chemical Formula 2-1 and a siloxane compound represented by the following Chemical Formula 3-1: 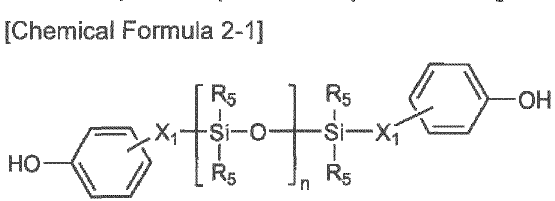 in the Chemical Formula 2-1, X₁, R₅ and n are the same as previously defined, 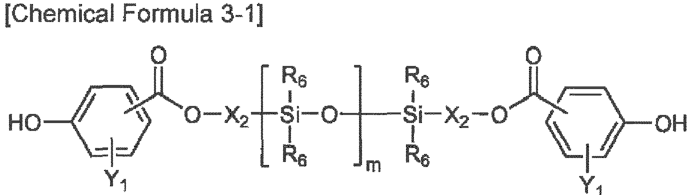 in the Chemical Formula 3-1, X₂, Y₁, R₆ and m are the same as previously defined.

As used herein, 'derived from a siloxane compound' means that a hydroxy group of the respective siloxane compound and a carbonate precursor are reacted to form the repeating unit represented by Chemical Formula 2 and the repeating unit represented by Chemical Formula 3. Further, the carbonate precursors that can be used for the formation of the repeating units represented by Chemical Formulae 2 and 3 are the same as those described for the carbonate precursor that can be used for the formation of the repeating unit represented by Chemical Formula 1 described above.

The methods for preparing the siloxane compound represented by Chemical Formula 2-1 and the siloxane compound represented by Chemical Formula 3-1 are represented by the following Reaction Schemes 1 and 2, respectively: 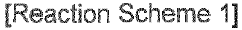 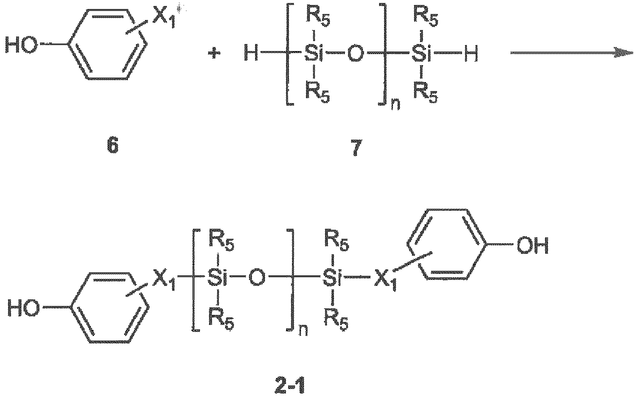 in the Reaction Scheme 1,
X₁' is C₂₋₁₀ alkenyl, and
X₁, R₅ and n are the same as previously defined, 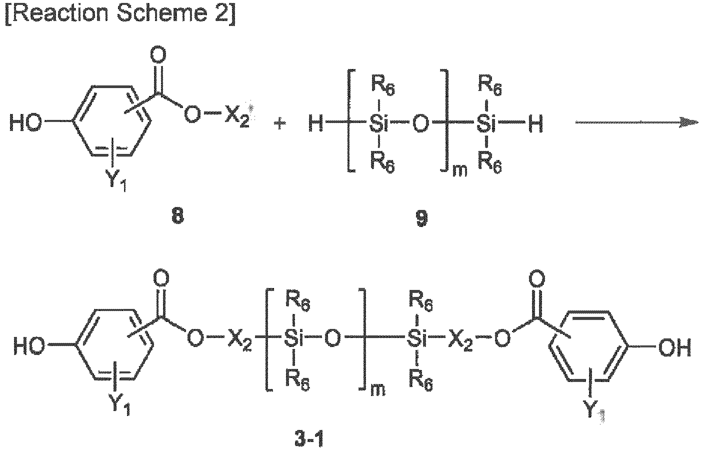
in the Reaction Scheme 2,
X₂' is C₂₋₁₀ alkenyl, and
X₂, Y₁, R₆ and m are the same as previously defined.

In the Reaction Scheme 1 and Reaction Scheme 2, the reaction is preferably conducted in the presence of a metal catalyst. As the metal catalyst, a Pt catalyst is preferably used. The Pt catalyst used herein may include one or more selected from the group consisting of Ashby catalyst, Karstedt catalyst, Lamoreaux catalyst, Speier catalyst, PtCl₂(COD), PtCl₂(benzonitrile)₂ and H₂PtBr₆. The metal catalyst may be used in an amount of not less than 0.001 parts by weight, not less than 0.005 parts by weight, or not less than 0.01 parts by weight; and not more than 1 part by weight, not more than 0.1 part by weight, or not more than 0.05 part by weight, based on 100 parts by weight of the compounds represented by the Chemical Formulae 7 or 9.

Further, the above reaction temperature is preferably 80 to 100°C. Further, the above reaction time is preferably 1 to 5 hours.

In addition, the compounds represented by Chemical Formulae 7 or 9 can be prepared by reacting an organodisiloxane and an organocyclosiloxane in the presence of an acid catalyst, and n and m may be adjusted by adjusting the amount of the reactants. The reaction temperature is preferably 50 to 70°C. Also, the reaction time is preferably 1 to 6 hours.

The above organodisiloxane may include one or more selected from the group consisting of tetramethyldisiloxane, tetraphenyldisiloxane, hexamethyldisiloxane and hexaphenyldisiloxane. In addition, the above organocyclosiloxane may include, for example, organocyclotetrasiloxane. As one example thereof, octamethylcyclotetrasiloxane and octaphenylcyclotetrasiloxane and the like can be included.

The above organodisiloxane can be used in an amount of not less than 0.1 parts by weight, or not less than 2 parts by weight; and not more than 10 parts by weight, or not more than 8 parts by weight, based on 100 parts by weight of the organocyclosiloxane.

The above acid catalyst that may be used herein includes one or more selected from the group consisting of H₂SO₄, HClO₄, AlCl₃, SbCl₅, SnCl₄ and acid clay (fuller's earth). Further, the acid catalyst may be used in an amount of not less than 0.1 parts by weight, not less than 0.5 parts by weight, or not less than 1 part by weight; and not more than 10 parts by weight, not more than 5 parts by weight or not more than 3 parts by weight, based on 100 parts by weight of the organocyclosiloxane.

In particular, by adjusting the content of the repeating unit represented by Chemical Formula 2 and the repeating unit represented by Chemical Formula 3, the impact resistance at low-temperature and melt index of the copolycarbonate can be improved simultaneously. Preferably, the weight ratio between the repeating units may be from 1:99 to 99:1. Preferably, the weight ratio is from 3:97 to 97:3, from 5:95 to 95:5, from 10:90 to 90:10, or from 15:85 to 85:15, and more preferably from 20:80 to 80:20. The weight ratio of the above repeating units corresponds to the weight ratio of siloxane compounds, for example the siloxane compound represented by Chemical Formula 2-1 and the siloxane compound represented by Chemical Formula 3-1

Preferably, the repeating unit represented by Chemical Formula 2 is represented by the following Chemical Formula 2-2: 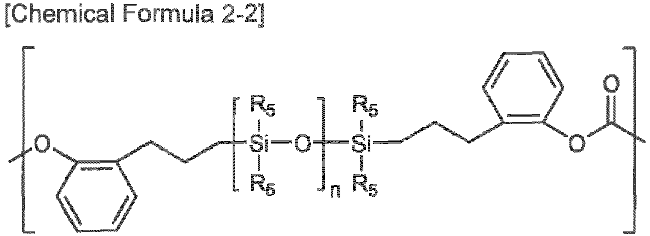 in the Chemical Formula 2-2, R₅ and n are the same as previously defined. Preferably, R₅ is methyl.

Also, preferably, the repeating unit represented by Chemical Formula 3 is represented by the following Chemical Formula 3-2: 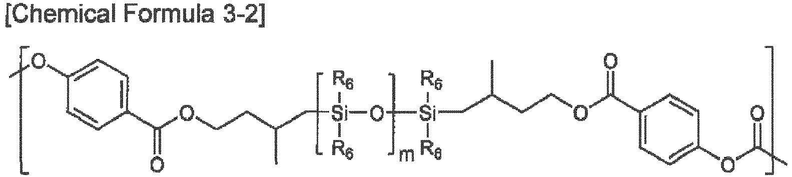 in the Chemical Formula 3-2, R₆ and m are the same as previously defined. Preferably, R₆ is methyl.

Further, preferably, the copolycarbonate according to the present invention comprises all of the repeating unit represented by Chemical Formula 1-1, the repeating unit represented by Chemical Formula 2-2, and the repeating unit represented by Chemical Formula 3-2.

Further, the present invention provides a method for preparing a copolycarbonate comprising a step of polymerizing the aromatic diol compound, the carbonate precursor and one or more siloxane compounds.

The aromatic diol compound, the carbonate precursor and the one or more siloxane compounds are the same as previously described.

During the polymerization, the one or more siloxane compounds can be used in an amount of not less than 0.1% by weight, not less than 0.5% by weight, not less than 1% by weight, not less than 1.5% by weight, not less than 2.0% by weight, not less than 2.5% by weight, or more than 3.0% by weight; and not more than 20% by weight, not more than 10% by weight, not more than 7% by weight, not more than 5% by weight or not more than 4% by weight, based on 100% by weight in total of the aromatic diol compound, the carbonate precursor and the one or more siloxane compounds. Also, the above aromatic diol compound can be used in an amount of not less than 40% by weight, not less than 50% by weight, or not less than 55% by weight; and not more than 80% by weight, not more than 70% by weight, or not more than 65% by weight, based on 100% by weight in total of the aromatic diol compound, the carbonate precursor and the one or more siloxane compounds. The above carbonate precursor can be used in an amount of not less than 10% by weight, not less than 20% by weight, or not less than 30% by weight, and in an amount of not more than 60% by weight, not more than 50% by weight, or not more than 40% by weight, based on 100% by weight in total of the aromatic diol compound, the carbonate precursor and the one or more siloxane compounds.

Further, as the polymerization method, an interfacial polymerization method can be used as one example. In this case, there is an effect in that the polymerization reaction is possible at a low temperature under an atmospheric pressure, and the molecular weight is easily controlled. The above interfacial polymerization is preferably conducted in the presence of an acid binder and an organic solvent. Furthermore, the above interfacial polymerization may comprise, for example, the steps of conducting pre-polymerization, then adding a coupling agent and again conducting polymerization. In this case, the copolycarbonate having a high molecular weight can be obtained.

The materials used in the interfacial polymerization are not particularly limited as long as they can be used in the polymerization of polycarbonate. The used amount thereof may be controlled as required.

The acid binding agent may include, for example, alkali metal hydroxides such as sodium hydroxide or potassium hydroxide, or amine compounds such as pyridine.

The organic solvent is not particularly limited as long as it is a solvent that can be usually used in the polymerization of polycarbonates. As one example, halogenated hydrocarbon such as methylene chloride or chlorobenzene can be used.

Further, during the interfacial polymerization, reaction accelerators, for example, a tertiary amine compound such as triethylamine, tetra-n-butyl ammonium bromide and tetra-n-butylphosphonium bromide or a quaternary ammonium compound or a quaternary phosphonium compound may be further used for acceleratating the reaction.

In the interfacial polymerization, the reaction temperature is preferably 0 to 40°C and the reaction time is preferably 10 minutes to 5 hours. Further, during the interfacial polymerization reaction, pH is preferably maintained at 9 or more, or 11 or more.

In addition, the interfacial polymerization may be conducted by further including a molecular weight modifier. The molecular weight modifier may be added before the initiation of polymerization, during the initiation of polymerization, or after the initiation of polymerization.

As the above molecular weight modifier, mono-alkylphenol may be used. As one example, the mono-alkylphenol is one or more selected from the group consisting of p-tert-butylphenol, p-cumyl phenol, decyl phenol, dodecyl phenol, tetradecyl phenol, hexadecyl phenol, octadecyl phenol, eicosyl phenol, docosyl phenol and triacontyl phenol, and preferably p-tert-butylphenol. In this case, the effect of adjusting the molecular weight control is great.

The above molecular weight modifier is contained, for example, in an amount of not less than 0.01 parts by weight, not less than 0.1 parts by weight, or not less than 1 part by weight, and in an amount of not more than 10 parts by weight, not more than 6 parts by weight, or not more than 5 parts by weight, based on 100 parts by weight of the aromatic diol compound. Within this range, the required molecular weight can be obtained.

In addition, the present invention provides a polycarbonate composition comprising the above-mentioned copolycarbonate and polycarbonate.

The copolycarbonate may be used alone, but it can be used together with the polycarbonate as needed to thereby control the physical properties of the copolycarbonate.

The above polycarbonate is distinguished from the copolycarbonate according to the present invention in that a polysiloxane structure is not introduced in a main chain of the polycarbonate.

Preferably, the above polycarbonate comprises a repeating unit represented by the following Chemical Formula 4: 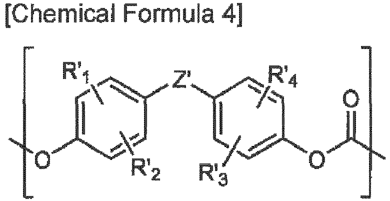 in the Chemical Formula 4,
R'₁, R'₂, R'₃ and R'₄ are each independently hydrogen, C₁₋₁₀ alkyl, C₁₋₁₀ alkoxy, or halogen,
Z' is C₁₋₁₀ alkylene unsubstituted or substituted with phenyl, C₃₋₁₅ cycloalkylene unsubstituted or substituted with C₁₋₁₀ alkyl, O, S, SO, SO₂ or CO.

Further, preferably, the above polycarbonate has a weight average molecular weight of 15,000 to 35,000 g/mol. More preferably, the above weight average molecular weight (g/mol) is not less than 20,000, not less than 21,000, not less than 22,000, not less than 23,000, not less than 24,000, not less than 25,000, not less than 26,000, not less than 27,000, or not less than 28,000. Further, the above weight average molecular weight (g/mol) is not more than 34,000, not more than 33,000, or not more than 32,000.

The repeating unit represented by Chemical Formula 4 is formed by reacting the aromatic diol compound and the carbonate precursor. The aromatic diol compound and the carbonate precursor that can be used herein are the same as previously described for the repeating unit represented by Chemical Formula 1.

Preferably, R'₁, R'₂, R'₃, R'₄ and Z' in Chemical Formula 4 are the same as previously described for R₁, R₂, R₃, R₄ and Z in Chemical Formula 1, respectively.

Further, preferably, the repeating unit represented by Chemical Formula 4 is represented by the following Chemical Formula 4-1:

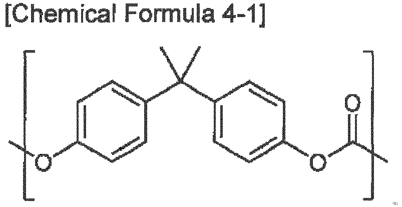

In the polycarbonate composition, the weight ratio of the copolycarbonate and the polycarbonate is preferably from 99 : 1 to 1 : 99, more preferably from 90:10 to 50:50, and most preferably from 80 : 20 to 60 : 40.

In addition, the present invention provides an article comprising the above-mentioned copolycarbonate or the polycarbonate composition.

Preferably, the above article is an injection molded article. In addition, the article may further comprise, for example, one or more selected from the group consisting of antioxidants, heat stabilizers, light stabilizers, plasticizers, antistatic agents, nucleating agents, flame retardants, lubricants, impact reinforcing agents, fluorescent brightening agents, ultraviolet absorbers, pigments and dyes.

The method for preparing the article may comprise the steps of mixing the copolycarbonate according to the present invention and additives such as antioxidants using a mixer, extrusion-molding the mixture with an extruder to produce a pellet, drying the pellet and then injecting the dried pellet with an injection molding machine.

### [ADVANTAGEOUS EFFECTS]

As set forth above, according to the present invention, the copolycarbonate in which a specific siloxane compound is introduced in a main chain of the polycarbonate has characteristics of providing an excellent transparency and a high spiral flow.

### [DETAILED DESCRIPTION OF THE EMBODIMENTS]

Below, preferred embodiments will be provided to assist in the understanding of the invention. However, these examples are provided only for illustration of the present invention, and should not be construed as limiting the present invention by the examples.

### Preparation Example 1: Preparation of polyorganosiloxane (AP-30)

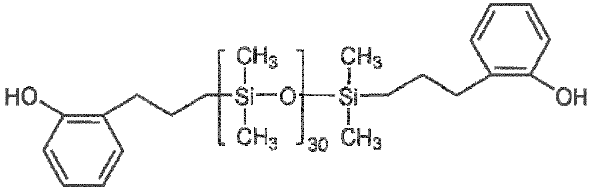

42.5 g (142.8 mmol) of octamethylcyclotetrasiloxane and 2.26 g (16.8 mmol) of tetramethyldisiloxane were mixed. The mixture was then placed in 3L flask together with 1 part by weight of an acid clay (DC-A3) compared to 100 parts by weight of octamethylcyclotetrasiloxane, and reacted at 60°C for 4 hours. After completion of the reaction, the reaction product was diluted with ethyl acetate and quickly filtered using a celite. The repeating unit (n) of the unmodified polyorganosiloxane thus prepared was 30 when confirmed through ¹H NMR.

To the resulting terminal-unmodified polyorganosiloxane, 9.57 g (71.3 mmol) of 2-allylphenol and 0.01 g (50 ppm) of Karstedt's platinum catalyst were added and reacted at 90°C for 3 hours. After completion of the reaction, the unreacted polyorganosiloxane was removed by conducting evaporation under the conditions of 120°C and 1 torr. The terminal-modified polyorganosiloxane thus prepared was designated as AP-30. AP-30 was a pale yellow oil and the repeating unit (n) was 30 when confirmed through ¹H NMR using a Varian 500MHz, and further purification was not required.

### Preparation Example 2: Preparation of polyorganosiloxane (MB-60)

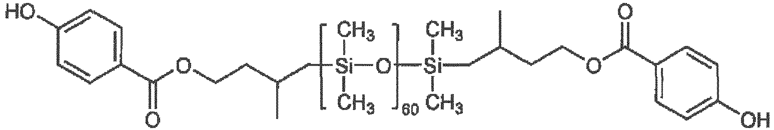

47.60 g (160 mmol) of octamethylcyclotetrasiloxane and 1.5 g (11 mmol) of tetramethyldisiloxane were mixed. The mixture was then introduced in 3L flask together with 1 part by weight of an acid clay (DC-A3) compared to 100 parts by weight of octamethylcyclotetrasiloxane, and reacted at 60°C for 4 hours. After completion of the reaction, the reaction product was diluted with ethyl acetate and quickly filtered using a celite. The repeating unit (m) of the unmodified polyorganosiloxane thus prepared was 60 when confirmed through ¹H NMR.

To the resulting terminal-unmodified polyorganosiloxane, 6.13 g (29.7 mmol) of 3-methylbut-3-enyl 4-hydroxybenzoate and 0.01 g (50 ppm) of Karstedt's platinum catalyst were added and reacted at 90°C for 3 hours. After completion of the reaction, the unreacted siloxane was removed by conducting evaporation under the conditions of 120°C and 1 torr. The terminal-modified polyorganosiloxane thus prepared was designated as MB-60. MB-60 was a pale yellow oil and the repeating unit (m) was 60 when confirmed through ¹H NMR using a Varian 500MHz, and further purification was not required.

### Preparation Example 3: Preparation of polyorganosiloxane (Eu-50)

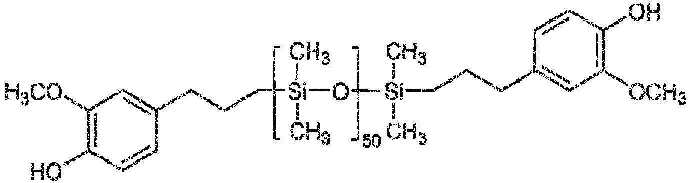

47.60 g (160 mmol) of octamethylcyclotetrasiloxane and 1.7 g (13 mmol) of tetramethyldisiloxane were mixed. The mixture was then placed in 3L flask together with 1 part by weight of an acid clay (DC-A3) compared to 100 parts by weight of octamethylcyclotetrasiloxane, and reacted at 60°C for 4 hours. After completion of the reaction, the reaction product was diluted with ethyl acetate and quickly filtered using a celite. The repeating unit (n) of the terminal-unmodified polyorganosiloxane thus prepared was 50 when confirmed through ¹H NMR.

To the resulting terminal-unmodified polyorganosiloxane, 6.13 g (29.7 mmol) of Eugenol and 0.01 g (50 ppm) of Karstedt's platinum catalyst were added and reacted at 90°C for 3 hours. After completion of the reaction, the unreacted siloxane was removed by conducting the evaporation under the conditions of 120°C and 1 torr. The terminal-modified polyorganosiloxane thus prepared was designated as Eu-50. Eu-50 was a pale yellow oil and the repeating unit (n) was 50 when confirmed through ¹H NMR using a Varian 500MHz, and further purification was not required.

### Example 1

### Step 1: Preparation of copolycarbonate resin

978.4 g of Bisphenol A (BPA), 1,620 g of NaOH 32% aqueous solution, and 7,500 g of distilled water were added to 20L glass reactor. After confirming that BPA was completely dissolved under nitrogen atmosphere, 3,670 g of methylene chloride, 17.5 g of p-tert-butylphenol, and 55.2 g of polyorganosiloxane previously prepared (mixture of 80% by weight of polyorganosiloxane (AP-30) of Preparation Example 1 and 20% by weight of polyorganosiloxane (MB-60) of Preparation Example 2) were added and mixed. To this mixture, 3,850 g of methylene chloride in which 542.5 g of triphosgene was dissolved was added dropwise for one hour. At this time, a NaOH aqueous solution was maintained at pH 12. After completion of the dropwise addition, the reaction product was aged for 15 minutes, and 195.7 g of triethylamine was dissolved in methylene chloride and added. After 10 minutes, pH was adjusted to 3 with 1 N aqueous hydrochloric acid solution and then washed three times with distilled water. Subsequently, the methylene chloride phase was separated, and then precipitated in methanol to give a copolycarbonate resin in the form of a powder. The molecular weight of the resulting copolycarbonate resin was measured by GPC using PC Standard and the result confirmed that the weight average molecular weight was 30,231 g/mol.

### 2) Preparation of injection-molded specimen

With respect to 1 part by weight of the copolycarbonate resin prepared above, 0.050 parts by weight of tris(2,4-di-tert-butylphenyl)phosphite, 0.010 parts by weight of octadecyl-3-(3,5-di-tert-butyl-4-hydroxyphenyl)propionate, and 0.030 parts by weight of pentaerythritoltetrastearate were added, and the resulting mixture was pelletized using a Φ30mm twin screw extruder provided with a vent. Thereafter, a specimen was injection-molded using a cylinder temperature of 300°C and a mold temperature of 80°C using the N-20C injection molding machine manufactured by JSW Co., Ltd.

### Example 2

The copolycarbonate resin and its injection-molded specimen were prepared in the same method as in Example 1, except that the total weight of polyorganosiloxane was 36.8 g (mixture of 80% by weight of polyorganosiloxane (AP-30) of Preparation Example 1 and 20% by weight of polyorganosiloxane (MB-60)).

### Comparative Example 1

The copolycarbonate resin and its injection-molded specimen were prepared by the same method as in Example 1, except that only 36.8 g of polyorganosiloxane (AP-30) of Preparation Example 1 was used as polyorganosiloxane.

### Comparative Example 2

The copolycarbonate resin and its injection-molded specimen were prepared by the same method as in Example 1, except that only 36.8 g of polyorganosiloxane (Eu-50) of Preparation Example 3 was used as polyorganosiloxane.

### Comparative Example 3

The copolycarbonate resin and its injection-molded specimen were prepared by the same method as in Example 1, except that polyorganosiloxane was not used.

### Experimental Example: Evaluation of physical properties

The weight average molecular weight of the resin prepared in the Examples and Comparative Examples were measured by GPC using PC Standard with Agilent 1200 series.

The physical properties of the specimens prepared with the resins of the Examples and the Comparative Examples were measured in the following manner and the results were shown in Table 1 below.
* Weight average molecular weight (g/mol): measured by GPC using PC Standard with Agilent 1200 series.
* Melt Index (MI): measured in accordance with ASTM D 1238 (300°C, 1.2kg conditions).
* Impact strength at room temperature: measured at 23°C in accordance with ASTM D256 (0.3175 cm (1/8 inch), Notched Izod).
* Impact strength at low-temperature: measured at -30°C in accordance with ASTM D256 (0.3175 cm (1/8 inch), Notched Izod).
* Transparency (Tt, %): measured in accordance with ASTM D1003 (layer thickness of 3 mm). The equipment used in the measurement and the range of measurement are as follows.
- Equipment name: Ultra scan pro (Focus, Inc.)
- Measurement range: 350-1050 nm

* Repeating units: determined by 1H-NMR using Varian 500MHz.
* Spiral flow: measured in accordance with ASTM D3123 (300 °C, mold temperature of 80 °C, capillary thickness of 1.5 mm, holding pressure of 2000 bar). In addition, the value of spiral flow was divided into the value of the melt index (MI).

**[Table 1]**

| | Impact strength at room temperature (J/m) | Impact strength at low-temperature (J/m) | Melt index (g/10 min) | Spiral flow (cm) | (Spiral flow)/(Melt index) | Weight average molecular weight (g/mol) | Transparency (%) |
|---|---|---|---|---|---|---|---|
| Com. Ex. 1 | 686 | 225 | 15 | 20 | 1.33 | 23,329 | 90.3 |
| Com. Ex. 2 | 802 | 678 | 10 | 15 | 1.50 | 26,166 | 85.2 |
| Com. Ex. 3 | 870 | 194 | 10 | 16 | 1.60 | 31,312 | 91.3 |
| Ex. 1 | 925 | 813 | 6 | 18 | 3.00 | 30,231 | 90.6 |
| Ex. 2 | 826 | 785 | 8 | 20 | 2.50 | 29,842 | 89.9 |

As shown in Table 1 above, the copolycarbonate according to the present invention (Examples 1 and 2) exhibited an excellent transparency while maintaining an excellent impact strength at room temperature. Further, it could be confirmed that the copolycarbonate according to the present invention exhibited a high spiral flow while having a low melt index(MI) compared to the Comparative Examples.

## Claims

1. A copolycarbonate comprising: an aromatic polycarbonate-based first repeating unit; and one or more aromatic polycarbonate-based second repeating units having siloxane bonds,
wherein the copolycarbonate has a melt index (MI) of 3 to 10g/10min as measured in accordance with ASTM D1238 (300°C, 1.2 kg conditions), and
a transparency of 87 to 91% as measured in accordance with ASTM D1003 (layer thickness of 3 mm), and
wherein the second repeating unit comprises a repeating unit represented by the following Chemical Formula 2 and a repeating unit represented by the following Chemical Formula 3: 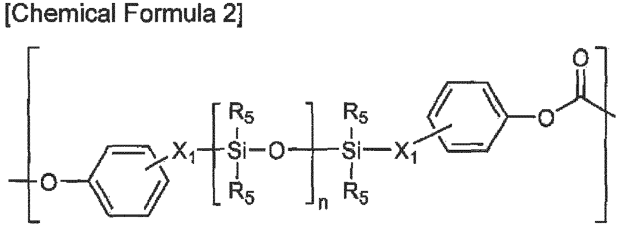 in the Chemical Formula 2,
each of X₁ is independently C₁₋₁₀ alkylene,
each of R₅ is independently hydrogen; C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
n is an integer of 10 to 200, 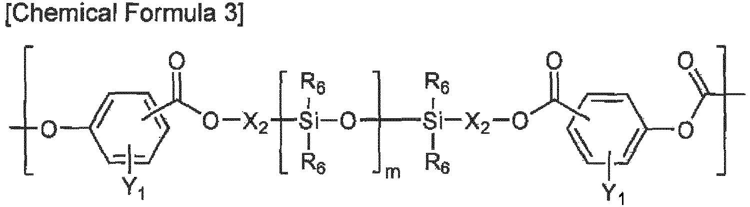
in the Chemical Formula 3,
each of X₂ is independently C₁₋₁₀ alkylene,
each of Y₁ is independently hydrogen, C₁₋₆ alkyl, halogen, hydroxy, C₁₋₆ alkoxy, or C₆₋₂₀ aryl,
each of R₆ is independently hydrogen; or C₁₋₁₅ alkyl unsubstituted or substituted with oxiranyl, oxiranyl-substituted C₁₋₁₀ alkoxy, or C₆₋₂₀ aryl; halogen; C₁₋₁₀ alkoxy; allyl; C₁₋₁₀ haloalkyl; or C₆₋₂₀ aryl, and
m is an integer of 10 to 200.

2. The copolycarbonate of claim 1 wherein
the copolycarbonate has a spiral flow of 16 to 25 cm as measured in accordance with ASTM D3123 (300°C, mold temperature of 80°C, capillary thickness of 1.5 mm, holding pressure of 2000 bar).

3. The copolycarbonate of claim 1 wherein
the copolycarbonate has a ratio of the spiral flow and the melt index (MI) (cm/g/10 min) of 1.7 to 5.0.

4. The copolycarbonate of claim 1 wherein
the copolycarbonate has a weight average molecular weight of 1,000 to 100,000 g/mol, measured by GPC using PC Standard.

5. The copolycarbonate of claim 1 wherein
the first repeating unit is represented by the following Chemical Formula 1: 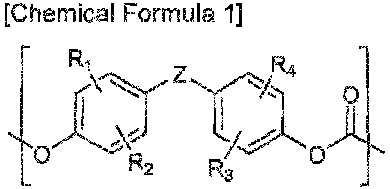 in the Chemical Formula 1,
R₁, R₂, R₃ and R₄ are each independently hydrogen, C₁₋₁₀ alkyl, C₁₋₁₀ alkoxy, or halogen,
Z is C₁₋₁₀ alkylene unsubstituted or substituted with phenyl, C₃₋₁₅ cycloalkylene unsubstituted or substituted with C₁₋₁₀ alkyl, O, S, SO, SO₂, or CO.

6. The copolycarbonate of claim 5 wherein
the repeating unit represented by the Chemical Formula 1 is derived from one or more aromatic diol compounds selected from the group consisting of bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, bisphenol A, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane.

7. The copolycarbonate of claim 5 wherein
the Chemical Formula 1 is represented by the following Chemical Formula 1-1:

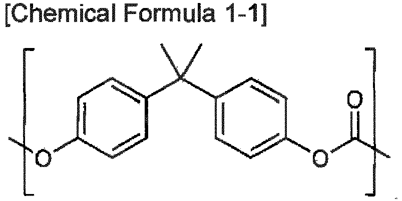

8. The copolycarbonate of claim 1 wherein
the weight ratio of the repeating unit represented by Chemical Formula 2 and the repeating unit represented by Chemical Formula 3 is from 80:20 to 95:5.

9. The copolycarbonate of claim 1 wherein
the repeating unit represented by the Chemical Formula 2 is represented by the following Chemical Formula 2-2:

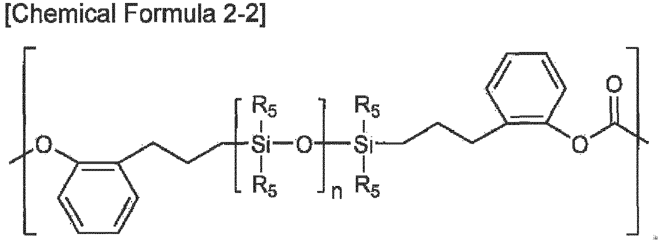

10. The copolycarbonate of claim 1 wherein
the repeating unit represented by Chemical Formula 3 is represented by the following Chemical Formula 3-2:

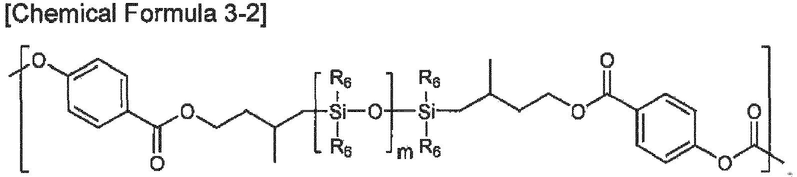

11. The copolycarbonate of claim 1 wherein
the copolycarbonate has an impact strength at low-temperature of 700 to 950 J/m as measured at -30°C in accordance with ASTM D256 (0.3175 cm (1/8 inch), Notched Izod).

12. The copolycarbonate of claim 1 wherein
the copolycarbonate has an impact strength at room temperature of 700 to 1000 J/m as measured at 23°C in accordance with ASTM D256 (0.3175 cm (1/8 inch), Notched Izod).

13. A polycarbonate composition comprising the copolycarbonate according to any one of claims 1 to 12 and a polycarbonate.

14. The polycarbonate composition of claim 13 wherein
a polysiloxane structure is not introduced in a main chain of the polycarbonate.

15. The polycarbonate composition of claim 13 wherein
the polycarbonate comprises a repeating unit represented by the following Chemical Formula 4: 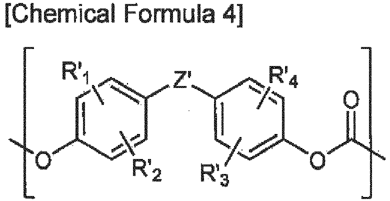 in the Chemical Formula 4,
R'₁, R'₂, R'₃ and R'₄ are each independently hydrogen, C₁₋₁₀ alkyl, C₁₋₁₀ alkoxy, or halogen,
Z' is C₁₋₁₀ alkylene unsubstituted or substituted with phenyl, C₃₋₁₅ cycloalkylene unsubstituted or substituted with C₁₋₁₀ alkyl, O, S, SO, SO₂ or CO.

## Patentansprüche

1. Copolycarbonat, umfassend: eine erste Wiederholungseinheit auf Basis von aromatischem Polycarbonat; und eine oder mehrere zweite Wiederholungseinheiten auf Basis von aromatischem Polycarbonat mit Siloxanbindungen,
wobei das Copolycarbonat einen Schmelzindex (MI) von 3 bis 10 g/10 min, wie gemessen gemäß ASTM D1238 (Bedingungen von 300°C, 1,2 kg) aufweist, und
eine Transparenz von 87 bis 91%, wie gemessen gemäß ASTM D1003 (Schichtdicke von 3 mm), und
wobei die zweite Wiederholungseinheit eine Wiederholungseinheit, die durch die folgende chemische Formel 2 dargestellt ist, und eine Wiederholungseinheit, die durch die folgende chemische Formel 3 dargestellt ist, umfasst: 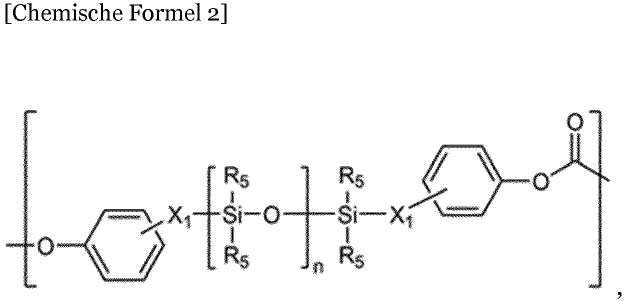 wobei in der chemischen Formel 2
jedes X₁ unabhängig C₁₋₁₀-Alkylen ist,
jedes R₅ unabhängig Wasserstoff; C₁₋₁₅-Alkyl, unsubstituiert oder substituiert mit Oxiranyl, Oxiranyl-substituiertem C₁₋₁₀-Alkoxy oder C₆₋₂₀-Aryl; Halogen; C₁₋₁₀-Alkoxy; Allyl; C₁₋₁₀-Halogenalkyl; oder C₆₋₂₀-Aryl ist, und
n eine ganze Zahl von 10 bis 200 ist, 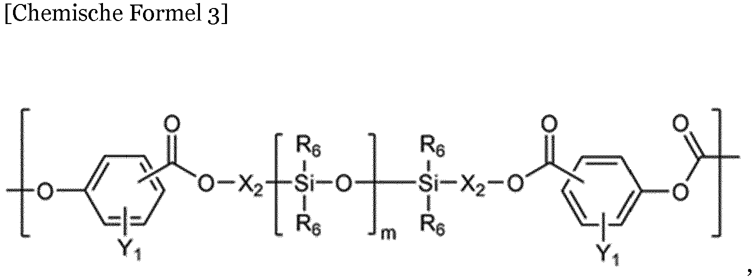
wobei in der chemischen Formel 3
jedes X2 unabhängig C₁₋₁₀-Alkylen ist,
jedes Y₁ unabhängig Wasserstoff, C₁₋₆-Alkyl, Halogen, Hydroxy, C₁₋₆-Alkoxy oder C₆₋₂₀-Aryl ist,
jedes R₆ unabhängig Wasserstoff; oder C₁₋₅-Alkyl, unsubstituiert oder substituiert mit Oxiranyl, Oxiranyl-substituiertem C₁₋₁₀-Alkoxy oder C₆₋₂₀-Aryl; Halogen; C₁₋₁₀-Alkoxy; Allyl; C₁₋₁₀-Halogenalkyl; oder C₆₋₂₀-Aryl ist, und
m eine ganze Zahl von 10 bis 200 ist.

2. Copolycarbonat nach Anspruch 1, wobei
das Copolycarbonat einen Spiralfluss von 16 bis 25 cm aufweist, wie gemessen gemäß ASTM D3123 (300°C, Formtemperatur von 80°C, Kapillardicke von 1,5 mm, Haltedruck von 2000 bar).

3. Copolycarbonat nach Anspruch 1, wobei
das Copolycarbonat ein Verhältnis des Spiralflusses und des Schmelzindex (MI) (cm/g/10 min) von 1,7 bis 5,0 aufweist.

4. Copolycarbonat nach Anspruch 1, wobei
das Copolycarbonat ein Gewichtsmittelmolekulargewicht von 1.000 bis 100.000 g/mol aufweist, gemessen mittels GPC unter Verwendung von PC-Standard.

5. Copolycarbonat nach Anspruch 1, wobei
die erste Wiederholungseinheit durch die folgende chemische Formel 1 dargestellt wird: 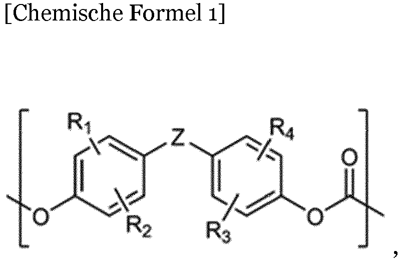 wobei in der chemischen Formel 1
R₁, R₂, R₃ und R₄ jeweils unabhängig Wasserstoff, C₁₋₁₀-Alkyl, C₁₋₁₀-Alkoxy oder Halogen sind,
Z C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, S02 oder CO ist.

6. Copolycarbonat nach Anspruch 5, wobei
die Wiederholungseinheit, die durch die chemische Formel 1 dargestellt wird, aus einer oder mehreren aromatischen Diolverbindungen abgeleitet wird, ausgewählt aus der Gruppe bestehend aus Bis(4-hydroxyphenyl)methan, Bis(4-hydroxyphenyl)ether, Bis(4-hydroxyphenyl)sulfon, Bis(4-hydroxyphenyl)-sulfoxid, Bis(4-hydroxyphenyl)sulfid, Bis(4-hydroxyphenyl)keton, 1,1-Bis(4-hydroxyphenyl)ethan, Bisphenol A, 2,2-Bis(4-hydroxyphenyl)butan, 1,1-Bis(4-hydroxyphenyl)cyclohexan, 2,2-Bis(4-hydroxy-3,5-dibromphenyl)propan, 2,2-Bis(4-hydroxy-3,5-dichlorphenyl)propan, 2,2-Bis(4-hydroxy-3-bromphenyl)-propan, 2,2-Bis(4-hydroxy-3-chlorphenyl)propan, 2,2-Bis(4-hydroxy-3-methylphenyl)propan, 2,2-Bis(4-hydroxy-3,5-dimethylphenyl)propan, 1,1-Bis(4-hydroxyphenyl)-i-phenylethan, Bis(4-hydroxyphenyl)diphenylmethan.

7. Copolycarbonat nach Anspruch 5, wobei
die chemische Formel 1 durch die folgende chemische Formel 1-1 dargestellt wird:

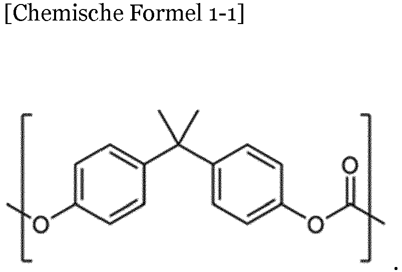

8. Copolycarbonat nach Anspruch 1, wobei
das Gewichtsverhältnis der durch chemische Formel 2 dargestellten Wiederholungseinheit und der durch chemische Formel 3 dargestellten Wiederholungseinheit von 80:20 bis 95:5 ist.

9. Copolycarbonat nach Anspruch 1, wobei
die durch chemische Formel 2 dargestellte Wiederholungseinheit durch die folgende chemische Formel 2-2 dargestellt wird:

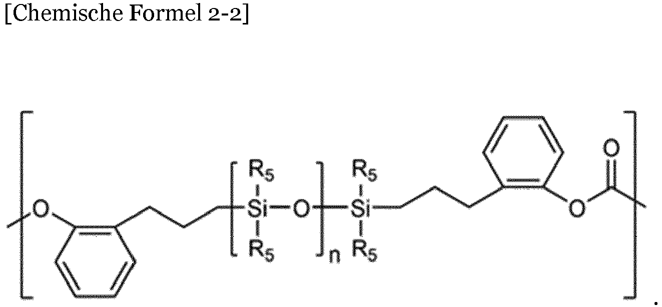

10. Copolycarbonat nach Anspruch 1, wobei
die durch chemische Formel 3 dargestellte Wiederholungseinheit durch die folgende chemische Formel 3-2 dargestellt wird:

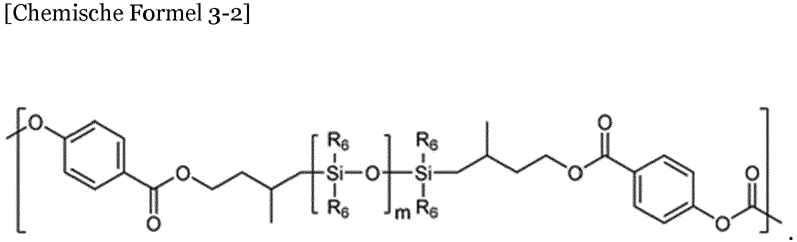

11. Copolycarbonat nach Anspruch 1, wobei
das Copolycarbonat eine Schlagfestigkeit bei niedriger Temperatur von 700 bis 950 J/m aufweist, wie gemessen bei -30°C gemäß ASTM D256 (0,3175 cm (1/8 inch), Notched Izod).

12. Copolycarbonat nach Anspruch 1, wobei
das Copolycarbonat eine Schlagfestigkeit bei Raumtemperatur von 700 bis 1000 J/m aufweist, wie gemessen bei 23°C gemäß ASTM D156 (0,3175 cm (1/8 inch), Notched Izod).

13. Polycarbonatzusammensetzung, umfassend das Copolycarbonat nach irgendeinem der Ansprüche 1 bis 12 und ein Polycarbonat.

14. Polycarbonatzusammensetzung nach Anspruch 13, wobei
eine Polysiloxanstruktur nicht in einer Hauptkette des Polycarbonats eingeführt ist.

15. Polycarbonatzusammensetzung nach Anspruch 13, wobei
das Polycarbonat eine Wiederholungseinheit umfasst, die durch die folgende chemische Formel 4 dargestellt ist: 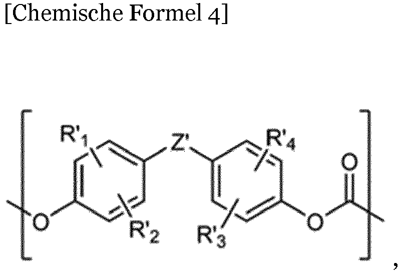 wobei in der chemischen Formel 4
R'₁, R'₂, R'₃ und R'₄ jeweils unabhängig Wasserstoff, C₁₋₁₀-Alkyl, C₁₋₁₀-Alkoxy oder Halogen sind,
Z' C₁₋₁₀-Alkylen, unsubstituiert oder substituiert mit Phenyl, C₃₋₁₅-Cycloalkylen, unsubstituiert oder substituiert mit C₁₋₁₀-Alkyl, O, S, SO, S02 oder CO ist.

## Revendications

1. Copolycarbonate comprenant : un premier motif récurrent à base de polycarbonate aromatique ; et un ou plusieurs deuxième motifs récurrents à base de polycarbonate aromatique ayant des liaisons siloxane,
dans lequel le polycarbonate a un indice de fusion (MI) de 3 à 10 g/10 min en tant que mesuré selon la norme D1238 de l'ASTM (conditions de service de 300 °C, 1,2 kg), et
une transparence de 87 à 91 % telle que mesurée selon la norme D1003 de l'ASTM (épaisseur de couche de 3 mm) et
dans lequel le deuxième motif récurrent comprend un motif récurrent représenté par la formule chimique 2 suivante et un motif récurrent représenté par la formule chimique 3 suivante : 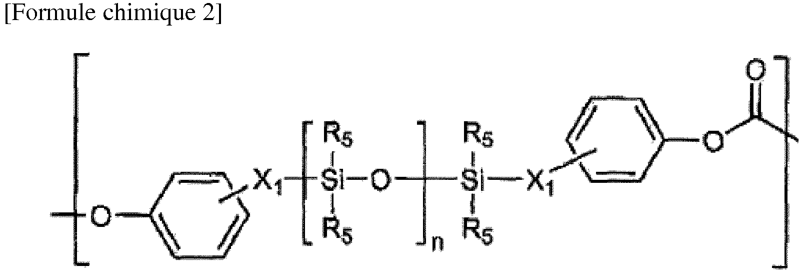 dans la formule chimique 2,
chaque X₁ représente indépendamment un alkylène en C₁ à C₁₀,
chaque R₅ représente indépendamment l'hydrogène ; un alkyle en C₁ à C₁₅ non substitué ou substitué par un oxiranyle, un alcoxy en C₁ à C₁₀ substitué par un oxiranyle ou un aryle en C₆ à C₂₀ ; un halogène ; un alcoxy en C₁ à C₁₀ ; un allyle ; un haloalkyle en C₁ à C₁₀ ; ou un aryle en C₆ à C₂₀, et
n représente un nombre entier valant de 10 à 200, 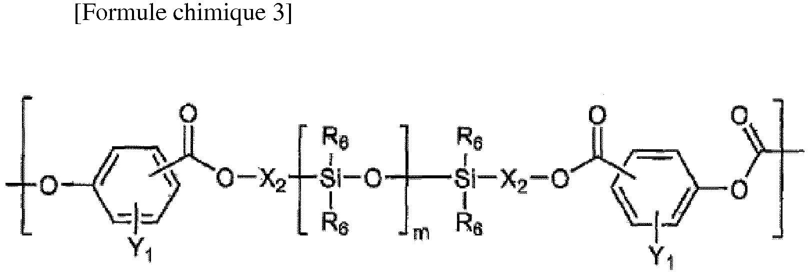
dans la formule chimique 3,
chacun des X₂ représente indépendamment un alkylène en C₁ à C₁₀,
chacun des Y₁ représente indépendamment l'hydrogène, un alkyle en C₁ à C₆, un halogène, un hydroxy, un alcoxy en C₁ à C₆ ou un aryle en C₆ à C₂₀,
chacun des R₆ représente indépendamment l'hydrogène ; ou un alkyle en C₁ à C₁₅ non substitué ou substitué par un oxiranyle, un alcoxy en C₁ à C₁₀ substitué par un oxiranyle, ou un aryle en C₆ à C₂₀ ; un halogène ; un alcoxy en C₁ à C₁₀ ; un allyle ; un haloalkyle en C₁ à C₁₀ ; ou un aryle en C₆ à C₂₀, et
m désigne un nombre entier valant de 10 à 200.

2. Copolycarbonate selon la revendication 1, dans lequel
le copolycarbonate a un écoulement en spirale de 16 à 25 cm tel que mesuré selon la norme D3123 de l'ASTM (300 °C, température du moule de 80 °C, épaisseur de capillaire de 1,5 mm, température de maintien de 2000 bars).

3. Copolycarbonate selon la revendication 1, dans lequel
le copolycarbonate a un rapport de l'écoulement en spirale et de l'indice de fusion (MI) (cm/g/10 min) compris dans l'intervalle de 1,7 à 5,0.

4. Copolycarbonate selon la revendication 1, dans lequel
le copolycarbonate a un poids moléculaire moyen en poids de 1.000 à 100.000 g/mol, tel que mesuré par chromatographie en phase gazeuse (GPC) en utilisant une norme PC.

5. Copolycarbonate selon la revendication 1, dans lequel
le premier motif récurrent est représenté par la formule chimique 1 suivante : 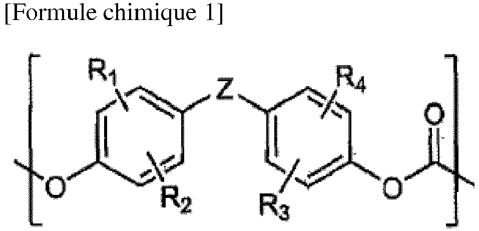 dans la formule chimique 1,
R₁, R₂, R₃ et R₄ représentent chacun indépendamment l'hydrogène, un alkyle en C₁ à C₁₀, un alcoxy en C₁ à C₁₀ ou un halogène,
Z représente un alkylène en C₁ à C₁₀ non substitué ou substitué par un phényle, un cycloalkylène en C₃ à C₁₅ non substitué ou substitué par un alkyle en C₁ à C₁₀, O, S, SO, SO₂ ou CO.

6. Copolycarbonate selon la revendication 5 dans lequel
le motif récurrent représenté par la formule chimique 1 est dérivé d'un ou de plusieurs composés diol aromatiques sélectionnés dans le groupe constitué du bis (4-hydroxyphényl) méthane, du bis (4-hydroxyphényl) éther, du bis (4-hydroxyphényl) sulfone, du bis (4-hydroxyphényl) sulfoxyde, du bis (4-hydroxyphényle) sulfure, du bis (4-hydroxyphényl) cétone, du 1,1-bis (4-hydroxyphényl) éthane, du bisphénol A, du 2,2-bis (4-hydroxyphényl) butane, du 1,1-bis (4-hydroxuphényle) cyclohexane, du 2,2-bis (4-hydroxy-3,5-dibromophényl) propane, du 2,2-bis (4-hydroxy-3,5-dichlorophényl) propane, du 2,2-bis (4-hydroxy-3-bromophényl) propane, du 2,2-bis (4-hydroxy-3-chlorophényl) propane, du 2,2-bis (4-hydroxy-3-méthylphényl) propane, du 2,2-bis (4-hydroxy-3-5-diméthylphényl) propane, du 1,1-bis (4-hydroxyphényl)-1-phényléthane, du bis(4-hydroxyphényl) diphénylméthane.

7. Copolycarbonate selon la revendication 5 dans lequel
la formule chimique 1 est représentée par la formule chimique 1-1 suivante :

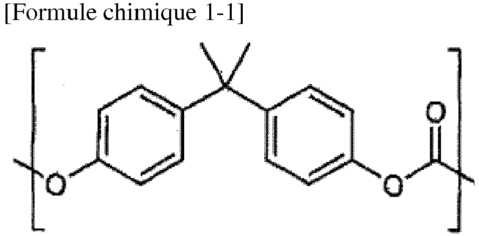

8. Copolycarbonate selon la revendication 1 dans lequel le rapport pondéral du motif récurrent représenté par la formule chimique 2 et du motif récurrent représenté par la formule chimique 3 est de 80 : 20 à 95 : 5.

9. Copolycarbonate selon la revendication 1 dans lequel
le motif récurrent représenté par la formule chimique 2 est représenté par la formule chimique 2-2 suivante :

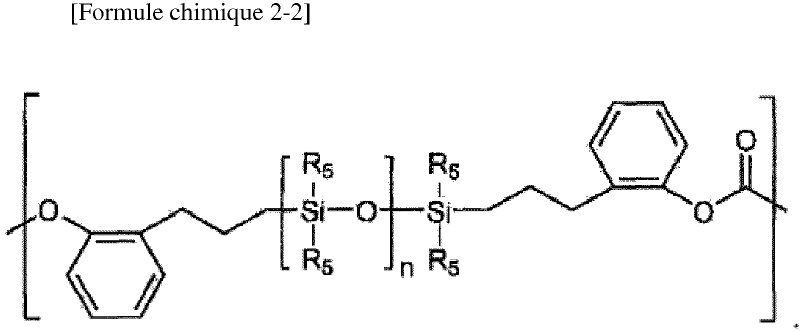

10. Copolycarbonate selon la revendication 1 dans lequel
le motif récurrent représenté par la formule chimique 3 est représenté par la formule chimique 3-2 suivante :

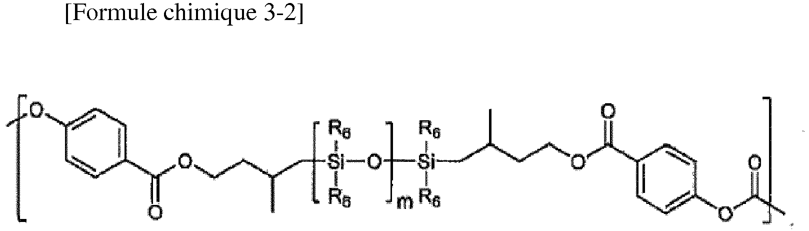

11. Copolycarbonate selon la revendication 1 dans lequel
le copolycarbonate a une résistance aux chocs à basse température de 700 à 950 J/m telle que mesurée à -30 °C selon la norme D256 de l'ASTM (0,3175 cm (1/8^{ième} de pouce), résistance au choc Izod entaillé).

12. Copolycarbonate selon la revendication 1 dans lequel
le copolycarbonate a une résistance aux chocs à température ambiante de 700 à 1000 J/m telle que mesurée à 23 °C selon la norme D256 de l'ASTM (0,3175 cm (1/8^{ième} de pouce), résistance au choc Izod entaillé).

13. Composition de polycarbonate comprenant le copolycarbonate selon l'une quelconque des revendications 1 à 12 et un polycarbonate.

14. Composition de polycarbonate selon la revendication 13 dans laquelle
une structure de polysiloxane n'est pas introduite dans une chaîne principale du polycarbonate.

15. Composition de polycarbonate selon la revendication 13 dans laquelle
le polycarbonate comprend un motif récurrent représenté par la formule chimique 4 suivante : 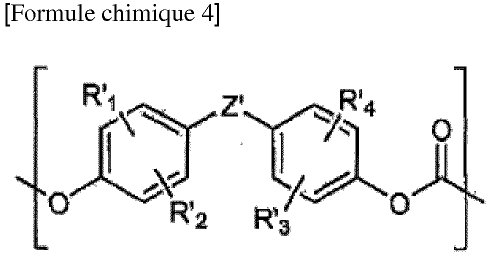 dans la formule chimique 4,
R'₁, R'₂, R'₃ et R'₄ représentent chacun indépendamment l'hydrogène, un alkyle en C₁ à C₁₀, un alcoxy en C₁ à C₁₀ ou un halogène,
Z' représente un alkylène en C₁ à C₁₀ non substitué ou substitué par le phényle, un cycloalkylène en C₃ à C₁₅ non substitué ou substitué par un alkyle en C₁ à C₁₀, O, S, SO, SO₂ ou CO.
